# EUROPÄISCHE PATENTANMELDUNG

(11) **EP 0 893 631 A2**
(43) Veröffentlichungstag der Anmeldung: **27.01.1999**
(21) Anmeldenummer: 98109870.0
(22) Anmeldetag: 29.05.1998
(51) Int. Cl.: F16J 15/08

(54) **Metallische Flachdichtung**

(30) Priorität: 22.07.1997 DE 19731493
(71) Anmelder: REINZ-DICHTUNGS-GMBH, 89233 Neu-Ulm (DE)
(72) Erfinder: Katzmaier, Hans, Dipl.-Ing. (FH), 89179 Beimerstetten (DE); Kögel, Alexander, Dipl.-Ing., 89231 Neu-Ulm (DE); Ludwig, Josef, 89168 Niederstotzingen (DE); Popielas, Frank, Dipl.-Ing., 89250 Senden (DE); Quick, Lothar, 89278 Nersingen (DE); Unseld, Günther, 89189 Neenstetten (DE); Weiss, Alfred, Dipl.-Ing. (FH), 89231 Neu-Ulm (DE)
(74) Vertreter: Tomerius, Isabel, Dr. Dipl.-Chem.

(57) **Zusammenfassung**

Die Erfindung betrifft eine metallische Flachdichtung und insbesondere eine Zylinderkopfdichtung oder Auspuffdichtung. Die Dichtung weist wenigstens eine Durchgangsöffnung auf, welche von zwei konzentrisch verlaufenden Sicken (3, 4) umschlossen ist. Die zweite Sicke (3) dient neben der Abdichtung der Durchgangsöffnung (6) zur Abstützung der ersten Sicke (4). Die Breite (b1) der zweiten Sicke (3) liegt erfindungsgemäß im Bereich von 1 : 1,5 bis 1 : 10 der Breite (b2) der ersten Sicke (4).

## Beschreibung

Die Erfindung betrifft eine metallische Flachdichtung und insbesondere eine Zylinderkopfdichtung oder Auspuffdichtung, bei welcher das Austreten heißer Verbrennungsgase über einen langen Zeitraum sicher verhindert werden muß.

Im Falle von Zylinderkopfdichtungen sind neben den Brennraumöffnungen auch Kühl- und Wasserdurchgänge abzudichten. Besonders hohe Anforderungen in bezug auf die Dichtigkeit stellen jedoch die Bereiche um die Brennraumöffnungen, da hier wegen des hohen Drucks der Verbrennungsgase, der hohen Temperatur und der ständigen Dichtspaltänderungen eine besonders flexible Anpassung der Dichtung an die wechselnden Bedingungen erforderlich ist, ohne daß eine vorzeitige Materialermüdung auftritt.
Eine Schwierigkeit besteht weiter darin, daß es nicht möglich ist, eine Zylinderkopfdichtung so zwischen Motorblock und Zylinderkopf einzuspannen, daß eine vollkommen ebene Dichtungsfläche erhalten wird. Beim Befestigen des Zylinderkopfes auf dem Motorblock wird der Zylinderkopf im Bereich der Zylinderkopfschrauben nach unten, in Richtung auf den Motorblock gezogen. Dadurch entsteht in der Dichtung eine Topographie. Der Abstand des Zylinderkopfes vom Motorblock ist umso größer, je weiter man sich von den Befestigungsbolzen oder -schrauben entfernt und sich innerhalb dieser befindet. Wenn die Bolzen, wie üblich, nahe um die Brennraumdurchgänge angeordnet sind, um hier für eine gute Abdichtung zu sorgen, entsteht zwischen Motorblock und Zylinderkopfdichtung im Bereich der Brennraumdurchgänge eine Art von kissen- oder tonnenförmigem Gewölbe, bei dem die Bolzen den tragenden Säulen oder Pfeilern des Gewölbes vergleichbar sind. Im Unterschied zu einem Deckengewölbe sind die Räume oberhalb der Brennraumöffnungen jedoch nicht statisch, sondern der Dichtspalt ändert sich mit den Verbrennungszyklen. Die Dichtungsränder stehen dagegen von den Bolzen nach aussen hin keilförmig auf. Auch diese Bereiche sind bei einer eingebauten Dichtung nicht vollständig starr, sondern bewegen sich während des Betriebs auf und ab. Diese Bewegungen werden hebelartig in das Innere der Dichtung übertragen, wobei die Hebelpunkte in etwa im Bereich der Verbindungslinien zwischen benachbarten Bolzenlöchern liegen. Bewegungen der Dichtungsrandbereiche setzen sich also in das Innere der Dichtung fort und erschweren die Abdichtung der Brennraumdurchgänge zusätzlich.

Um trotz der genannten Schwierigkeiten für eine zuverlässige Abdichtung im Brennraumbereich zu sorgen, hat sich bei Zylinderkopfdichtungen ein Konzept bewährt, das im folgenden als "Zwei-Linien-Konzept" bezeichnet werden soll. Die erste Dichtungslinie befindet sich dabei unmittelbar im Randbereich der Dichtung um die jeweilige Brennraumöffnung. Die zweite Dichtungslinie verläuft mit größerem Abstand von der Brennraumöffnung um die erste Dichtungslinie herum. Dichtungen, die dieses Konzept verwirklichen, sind beispielsweise aus der EP-A-0 230 804 und der EP-A-0 306 766 bekannt. Als zweite Dichtungslinie sind jeweils in durch wenigstens ein Zwischenblech getrennten Deckblechen ausgebildete Sicken vorhanden, deren Scheitelpunkte auf gegenüberliegenden Seiten der Zwischenbleche aufliegen. Um ein vollständiges Abflachen der Sicken während des Betriebs zu verhindern und die Elastizität der Sicken dauerhaft zu erhalten, ist am Brennraumrand der Dichtung ein "Stopper-Bereich" als erste Dichtungslinie ausgebildet. Der Stopper-Bereich entsteht durch Umfalzen eines Zwischenblechs auf sich selbst (EP-A-0 306 766) oder durch Umfalzen eines Zwischenblechs um ein auf dem Zwischenblech angeordnetes Distanzblech (EP-A-0 230 804). Während die Sicken der zweiten Dichtungslinie also die elastische Anpassung der Dichtung an die Druck- und Temperaturschwankungen im Bereich um die Brennraumöffnungen sicherstellen, verhindert der Stopper-Bereich der ersten Dichtungslinie, daß heiße Brenngase unmittelbar auf die Sicken einwirken und die Sicken vollständig abgeflacht werden und so ihre Elastizität einbüßen.

In den beschriebenen Dichtungen wird diese Zwei-Linien-Abdichtung erreicht, indem die verschiedenen Dichtfunktionen auf verschiedene Blechlagen einer Mehrlagen-Dichtung verteilt werden. Dadurch wird die Herstellung der Dichtungen aufwendig und teuer.

**Aufgabe** der Erfindung ist es, eine metallische Flachdichtung anzugeben, die einfach aufgebaut sowie leicht und kostengünstig herstellbar ist, dabei aber trotzdem für eine zuverlässige und dauerhafte Abdichtung sorgt. Die erfindungsgemäße Dichtung soll sich insbesondere für die Verwendung als Zylinderkopfdichtung eignen.

Die Lösung der Aufgabe gelingt mit der Flachdichtung gemäß Anspruch 1. Weitere Ausführungsformen ergeben sich aus den Unteransprüchen.

Die Erfindung betrifft also eine metallische Flachdichtung, welche wenigstens eine Durchgangsöffnung aufweist, die von einer ersten Sicke vollständig umschlossen ist. Für diese Sicke ist eine Abstützeinrichtung vorgesehen, die im eingebauten Zustand der Dichtung ein vollständiges Abflachen der ersten Sicke verhindert. Erfindungsgemäß handelt es sich bei der Abstützeinrichtung ebenfalls um eine Sicke, welche in derselben Metallage ausgebildet ist wie die erste Sicke. Diese zweite Sicke weist erfindungsgemäß eine Breite auf, die im Bereich von 1 : 1,5 bis 1 : 10 der Breite der ersten Sicke liegt. Unter Sickenbreite ist hier die Entfernung von Fußpunkt zu Fußpunkt einer Sicke zu verstehen. Ein bevorzugtes Breitenverhältnis der Sicken liegt beispielsweise bei 1 : 2 bis 1 : 7.

Die zweite Sicke besitzt also eine geringere Breite und höhere Federkonstante als die erste Sicke, so daß letztere von der zweiten Sicke gestützt und verhindert wird, daß die erste Sicke vollständig komprimiert und ihre Elastizität dadurch vermindert wird. Die Stützfunktion der zweiten Sicke kann zusätzlich durch die Formgebung beeinflußt werden. So ist es möglich, die zweite Sicke eckig auszugestalten und damit ihre Federkonstante zu erhöhen. Grundsätzlich können beide, erste und zweite, Sicken die im Stand der Technik übliche Formgebung aufweisen und entweder beispielsweise beide rund, beide eckig oder jeweils eine rund und die andere eckig ausgebildet sein. Außerdem können erste und/oder zweite Sicken asymmetrisch ausgebildet sein, also beispielsweise an ihrer der Brennraumöffnung zugewandten Flanke steiler ansteigen als an der der Brennraumöffnung abgewandten Flanke. Breitenverhältnis und Formgebung werden dabei zweckmäßig entsprechend den jeweiligen Abdichtungsanforderungen des Motortyps und den dort erforderlichen Flächenpressungen gewählt.

Die Verformbarkeit der ersten und zweiten Sicke kann zusätzlich auf an sich bekannte Weise durch Variation der Sickensteilheit und -höhe sowie über die Materialwahl gesteuert werden, solange das Breitenverhältnis der Sicken sich im erfindungsgemäßen Rahmen bewegt und die zweite Sicke härter und weniger verformbar als die erste Sicke Sicke ist.

Zusätzlich lassen sich die plastischen und elastischen Eigenschaften der Sicken dadurch beeinflussen, daß der Raum unter der Wölbung der ersten und/oder der zweiten Sicke ganz oder teilweise mit einem plastisch oder elastisch verformbaren Material angefüllt wird. Geeignete Füllmaterialien sind elastomere Kunststoffe oder metallische Materialien, insbesondere weiche Metalle wie beispielsweise Weicheisen. Auch federelastische Materialien wie eine oder mehrere Spiralen, Blatt- oder Wurmfedern, welche im Bereich der Sickenwölbung eingelegt werden, so daß sie die abzudichtende Durchgangsöffnung ganz oder teilweise umgeben, können verwendet werden.

In einer bevorzugten Variante der Erfindung ist die zweite Sicke radial innerhalb der ersten Sicke angeordnet, jedoch ist die umgekehrte Anordnung gleichfalls möglich.

Um eine besonders gute Anpassung der Sicken an die vorstehend beschriebene dreidimensionale Aufwölbung der Dichtung im Einbauzustand zu erreichen, werden die Sicken zweckmäßig in Umfangsrichtung profiliert. Zweckmäßig nimmt also die Federkonstante von erster und/oder zweiter Sicke mit zunehmendem Abstand von den die Sicken umgebenden Bolzenlöchern zu. Dies kann auf an sich bekannte Weise z. B. durch eine Vergrößerung der Sickenhöhe oder Verringerung der Sickenbreite erreicht werden. Dabei bleibt das Breitenverhältnis von zweiter zu erster Sicke für jede sich von der Mitte der Durchgangsöffnung radial nach außen erstreckende Schnittlinie im erfindungsgemäß definierten Bereich von 1 : 1,5 bis 1 : 10.
Auch für die Füllmaterialien kann eine Profilierung in Umfangsrichtung vorgesehen sein.

Eine gezielte Einstellung der Verformbarkeit und Stützwirkung der zweiten Sicke ist zudem durch eine Materialanhäufung im Bereich dieser zweiten Sicke möglich. Beispielsweise kann die Blechstärke im Bereich der zweiten Sicke gezielt vergrößert werden. Liegt die zweite Sicke radial innerhalb der ersten Sicke, geschieht dies zweckmäßig durch Anstauchen des Dichtungsrandes im Bereich der Durchgangsöffnung. Die Materialverdickung im Bereich der zweiten Sicke erhöht deren Steifigkeit und verbessert deren Stützwirkung auf die erste Sicke.

Auch die Orientierung der ersten und zweiten Sicke kann den vorgefundenen Abdichtungsanforderungen entsprechend angepaßt werden. Erste und zweite Sicke können entweder in dieselbe oder entgegengesetzte Richtungen aufgewölbt sein.

Erste und zweite Sicke können unmittelbar aufeinander folgend angeordnet sein. Bevorzugt sind beide Sicken jedoch voneinander beabstandet und durch einen im wesentlichen ebenen Abschnitt getrennt. Zweckmäßig besitzt dieser ebene Abschnitt eine Breite, die wenigstens der 0,3-fachen Breite der zweiten Sicke entspricht.

Die erfindungsgemäßen Dichtungen erlauben es, trotz ihres sehr einfachen Aufbaus Durchgangsöffnungen auch unter extremen Bedingungen, wie sie beispielsweise bei Brennraumöffnungen in Zylinderkopfdichtungen vorgefunden werden, effektiv und dauerhaft abzudichten. Die ausgezeichnete Dichtungswirkung wird bereits bei Dichtungen erreicht, die als Einlagendichtungen ausgebildet sind. Die Erfindung ist jedoch nicht auf einlagige Dichtungen beschränkt, sondern kann neben der Lage, welche erste und zweite Sicke umfaßt, eine oder mehrere weitere Dichtungslagen aufweisen. Beispielsweise kann wenigstens eine entsprechend der ersten Lage geformte weitere Lage parallel zur ersten Lage auf diese auflaminiert sein, wobei sich die metallischen Materialien der einzelnen Lagen voneinander unterscheiden können.

Eine weitere Möglichkeit besteht darin, eine zweite Lage spiegelbildlich zur ersten Lage aufzulaminieren.
Außerdem können alle erfindungsgemäßen Dichtungen Zwischen- oder Distanzbleche umfassen, die dazu dienen, die Gesamtdicke der Dichtung dem abzudichtenden Spalt (z. B. zwischen Motorblock und Zylinderkopf) anzupassen.

Die erfindungsgemäßen Dichtungen sind zudem nicht auf Zylinderkopfdichtungen beschränkt, sondern eignen sich grundsätzlich für alle Bereiche, in denen Flachdichtungen zur Abdichtungen von Durchgangsöffnungen eingesetzt werden. Als weiteres Beispiel können Auspuffdichtungen genannt werden.

Zur Verbesserung der Mikroabdichtung kann es zweckmäßig sein, die erfindungsgemäße Dichtung zumindest auf ihren nach außen weisenden Oberflächen ganz oder teilweise zu beschichten. Eine derartige Beschichtung wird vorzugsweise bei Zylinderkopfdichtungen verwendet, während sie bei Auspuffdichtungen nicht unbedingt erforderlich ist. Geeignete Beschichtungsmaterialien sind beispielsweise Kunststoffe oder metallische Beschichtungen, wie sie allgemein im Stand der Technik üblich sind. Zweckmäßig werden insbesondere diejenigen Flächen beschichtet, die in Kontakt mit den abzudichtenden Gegenflächen kommen. Im Falle von Zylinderkopfdichtungen sind die als Gleitbeschichtung bekannten Beschichtungen bevorzugt, die beispielsweise aus Teflon oder Molybdänsulfid bestehen. Auch oberflächenstrukturierte Beschichtungen können verwendet werden.

Zur Vereinfachung der Herstellung ist es möglich, den Funktionsbereich der Dichtung, welcher die erste und zweite Sicke umfaßt, unabhängig vom restlichen Bereich der Dichtung als Einlageteil zu fertigen, der später in eine entsprechende Ausnehmung im restlichen Dichtungskörper eingesetzt wird. Zweckmäßig handelt es sich bei dem Einlageteil um einen Einlagering.

Die Erfindung soll im folgenden anhand einer Zeichnung am Beispiel von Zylinderkopfdichtungen näher beschrieben werden. Dabei zeigen schematisch
- Fig. 1: einen Teil-Querschnitt durch eine erfindungsgemäße Dichtung,
- Fig. 2 bis 4: Teil-Querschnitte durch weitere erfindungsgemäße Dichtungen und
- Fig. 5: eine Teil-Draufsicht auf eine erfindungsgemäße Dichtung.

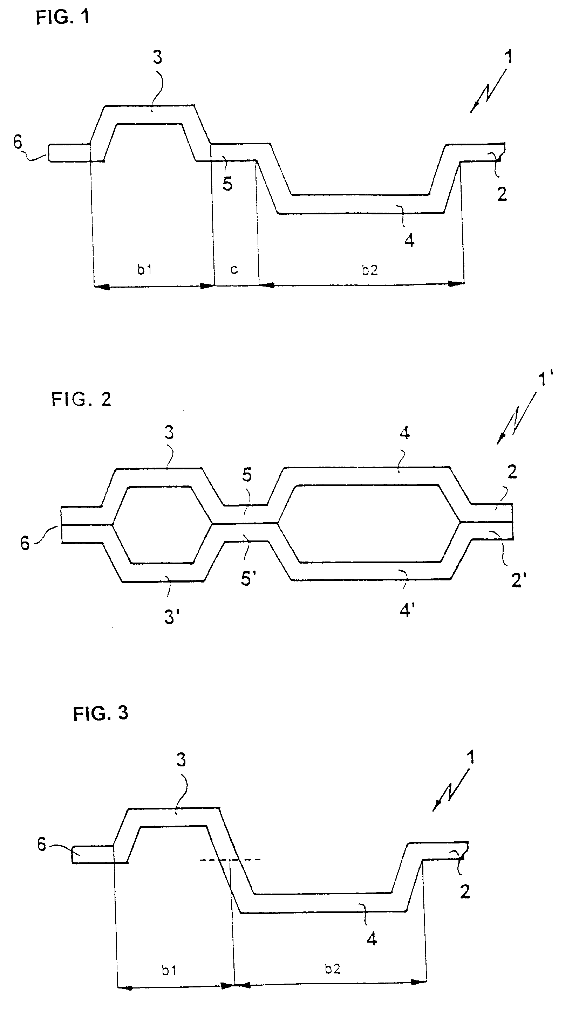

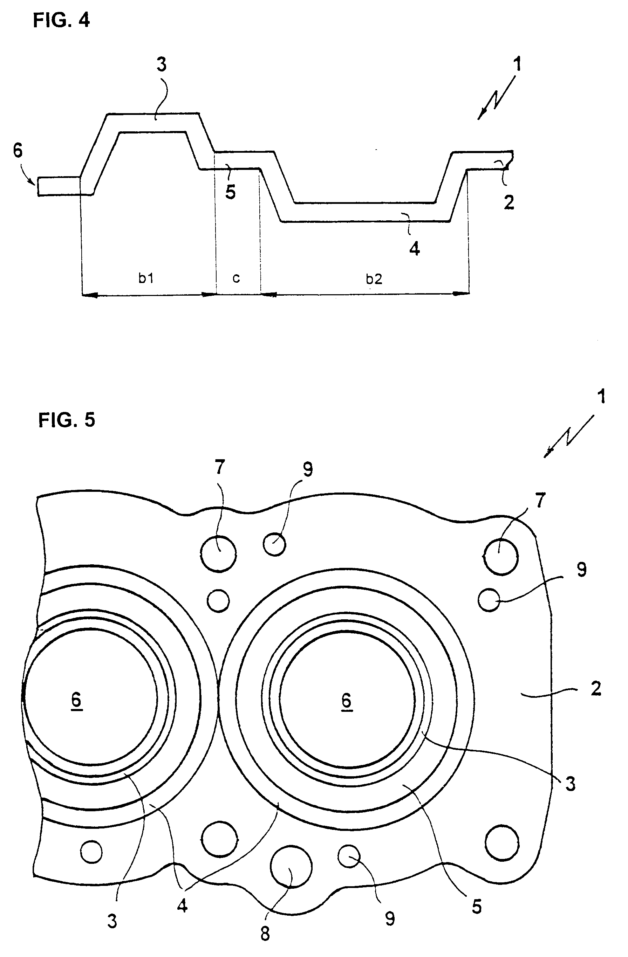

Im einzelnen zeigt Fig. 1 einen Teil-Querschnitt durch eine erfindungsgemäße Zylinderkopfdichtung 1, wie sie in Fig. 5 in Teil-Draufsicht gezeigt ist, im Bereich um eine Brennraumöffnung 6. Neben den Brennraumöffnungen 6 weist die Zylinderkopfdichtung Bolzenlöcher 7, Öl- 8 und Wasserdurchgänge 9 auf. Die abgebildete Dichtung 1 ist eine Einlagendichtung, welche nur eine metallische Dichtungslage 2 aufweist. Die Brennraumöffnungen 6 sind jeweils von zwei konzentrisch verlaufenden Sicken 3 und 4 umgeben. Bei Dichtungen mit sehr eng beieinanderliegenden Brennraumöffnungen 6 kann die äußere Sicke 4, falls gewünscht, im Bereich zwischen zwei benachbarten Brennraumöffnungen 6 zu einer einzigen Sicke zusammenlaufen.

Erfindungsgemäß weist die zweite Sicke 3 eine Breite b1 auf, die im Bereich von 1 : 1,5 bis 1 : 10 der Breite b2 der ersten Sicke 4 liegt. Die zweite Sicke 3 übernimmt neben der Abdichtung der Brennraumöffnung 6 auch Stützfunktion für die äußere, erste Sicke 4. Die Sicken 3 und 4 sind durch einen ebenen Abschnitt voneinander getrennt. Der ebene Abschnitt 5 besitzt eine Breite c, die wenigstens das 0,3-fache der Breite b1 der zweiten Sicke 3 beträgt.

Fig. 2 zeigt eine weitere Ausführungsform der erfindungsgemäßen Dichtung. Gleiche Bezugszeichen bezeichnen gleiche Teile wie in Fig. 1.
Der Grundaufbau der Dichtung kann erneut dem in Fig. 5 wiedergegebenen entsprechen. Im Unterschied zu der in Fig. 1 gezeigten Dichtung ist der Funktionsbereich, welcher die erste und zweite Sicke aufweist, hier jedoch als Einlagering 1' ausgebildet, der gesondert gefertigt und nachträglich in eine entsprechende Ausnehmung in der erfindungsgemäßen Dichtung eingesetzt werden kann. Anders als bei der Dichtung gemäß Fig. 1 sind erste Sicke 4 und zweite Sicke 3 in der Dichtungslage 2 in die gleiche Richtung gewölbt.

Spiegelbildlich unter die Dichtungslage 2 ist eine zweite Dichtungslage 2' auflaminiert, deren gleichgerichtete Sicken 3' und 4' von den Sicken 3 und 4 wegweisen.

Die in Fig. 3 dargestellte Dichtung entspricht im wesentlichen der Dichtung, die in Fig. 1 gezeigt wird. Im Unterschied zu letzterer ist jedoch zwischen den Sicken 3 und 4 kein ebener Abschnitt 5 vorhanden. Beide Sicken gehen unmittelbar ineinander über. In der Draufsicht entspricht diese Dichtung im wesentlichen ebenfalls der Darstellung in Fig. 5, jedoch fehlt der ebene Abschnitt 5 zwischen den Sicken 3 und 4. Diese Variante bietet sich insbesondere in solchen Fällen an, in denen im Bereich um die Brennraumöffnungen wenig Platz zur Verfügung steht.

In Fig. 4 ist eine Dichtung dargestellt, die sich von der in Fig. 1 gezeigten Dichtung dadurch unterscheidet, daß die zweite Sicke 3 unsymmetrisch ausgebildet ist. Der der Brennraumöffnung benachbarte Sickenschenkel der Sicke 3 ist weiter nach unten gezogen als der gegenüberliegende Sickenschenkel, der in den ebenen Abschnitt 5 übergeht. Durch die Verlängerung des Sickenschenkels wird die Abstützwirkung der Sicke 3 auf die erste Sicke 4 erhöht.

Die erfindungsgemäßen Dichtungen gewährleisten trotz ihres sehr einfachen Aufbaus eine ausgezeichnete und dauerhafte Abdichtung von Durchgangsöffnungen, bei denen hohe Anforderungen an eine Abdichtung gestellt werden, wie dies bei Brennraumöffnungen von Zylinderkopfdichtungen der Fall ist.

## Patentansprüche

1. Metallische Flachdichtung (1), welche wenigstens eine Durchgangsöffnung (6) aufweist, die von einer ersten Sicke (4) vollständig umschlossen ist, und welche in derselben Dichtungslage (2) eine zweite Sicke (3) als Abstützungseinrichtung für die erste Sicke (4) umfaßt,
dadurch **gekennzeichnet**,
daß die zweite Sicke (3) eine Breite (b1) aufweist, die im Bereich von 1 : 1,5 bis 1 : 10 der Breite (b2) der ersten Sicke (4) liegt.

2. Metallische Flachdichtung gemäß Anspruch 1,
dadurch **gekennzeichnet**,
daß die zweite Sicke (3) radial innerhalb der ersten Sicke (4) liegt.

3. Metallische Flachdichtung gemäß Anspruch 1 oder 2,
dadurch **gekennzeichnet**,
daß die Breite (b1) der zweiten Sicke (3) im Bereich von 1 : 2 bis 1 : 7 der Breite (b2) der ersten Sicke (4) liegt.

4. Metallische Flachdichtung gemäß einem der Ansprüche 1 bis 3,
dadurch **gekennzeichnet**,
daß sich zwischen erster Sicke (4) und zweiter Sicke (3) ein im wesentlichen ebener Abschnitt (5) befindet.

5. Metallische Flachdichtung gemäß Anspruch 4,
dadurch **gekennzeichnet**,
daß die Breite (c) des ebenen Abschnitts (5) wenigstens die 0,3-fache Breite der zweiten Sicke (3) aufweist.

6. Metallische Flachdichtung gemäß einem der Ansprüche 1 bis 5,
dadurch **gekennzeichnet**,
daß die Sicken (3, 4) zur gleichen Seite der Dichtung hin aufgewölbt sind.

7. Metallische Flachdichtung gemäß einem der Ansprüche 1 bis 5,
dadurch **gekennzeichnet**,
daß die Sicken (3, 4) zu entgegengesetzten Seiten der Dichtung hin aufgewölbt sind.

8. Metallische Flachdichtung gemäß einem der Ansprüche 1 bis 7,
dadurch **gekennzeichnet**,
daß erste Sicke (4) und zweite Sicke (3) eine unterschiedliche Form aufweisen.

9. Metallische Flachdichtung gemäß einem der Ansprüche 2 bis 8,
dadurch **gekennzeichnet**,
daß die zweite Sicke (3) eckig ist.

10. Metallische Flachdichtung gemäß einem der Ansprüche 1 bis 9,
dadurch **gekennzeichnet,**
daß erste Sicke (4) und/oder zweite Sicke (3) asymmetrisch geformt sind.

11. Metallische Flachdichtung gemäß einem der Ansprüche 1 bis 10,
dadurch **gekennzeichnet**,
daß es sich um eine Mehrlagendichtung handelt.

12. Metallische Flachdichtung gemäß Anspruch 11,
dadurch **gekennzeichnet**,
daß parallel zu einer ersten Dichtungslage (2) mit erster und zweiter Sicke (3, 4) wenigstens eine weitere Dichtungslage mit erster und zweiter Sicke auflaminiert ist.

13. Metallische Flachdichtung gemäß Anspruch 11,
dadurch **gekennzeichnet**,
daß spiegelbildlich zu einer ersten Dichtungslage (2) mit erster und zweiter Sicke (3, 4) eine weitere Dichtungslage (2') mit erster und zweiter Sicke (3', 4') angeordnet ist.

14. Metallische Flachdichtung gemäß einem der Ansprüche 1 bis 13,
dadurch **gekennzeichnet**,
daß erste Sicke(n) (4, 4') und/oder zweite Sicke(n) (3, 3') in Umfangsrichtung höhen- und/oder breitenprofiliert sind.

15. Metallische Flachdichtung gemäß einem der Ansprüche 2 bis 14,
dadurch **gekennzeichnet**,
daß die Dicke der wenigstens einen Dichtungslage (2, 2') im Bereich der inneren Sicke (3, 3') gegenüber dem restlichen Bereich der Dichtungslage erhöht ist.

16. Metallische Flachdichtung gemäß einem der Ansprüche 1 bis 15,
dadurch **gekennzeichnet**,
daß der von der Sickenwölbung umschlossene Bereich der ersten Sicke (4, 4') und/oder der zweiten Sicke (3, 3') mit einem verformbaren Material ganz oder teilweise angefüllt ist.

17. Metallische Flachdichtung gemäß Anspruch 16,
dadurch **gekennzeichnet**,
daß das verformbare Material ein Elastomer, ein metallisches Material oder ein federelastisches Material ist.

18. Metallische Flachdichtung gemäß einem der Ansprüche 1 bis 17,
dadurch **gekennzeichnet**,
daß zumindest ihre nach außen weisenden Oberflächen ganz oder teilweise beschichtet sind.

19. Metallische Flachdichtung gemäß Anspruch 18,
dadurch **gekennzeichnet**,
daß die Flächen, welche mit den abzudichtenden Gegenflächen in Kontakt kommen, beschichtet sind.

20. Metallische Flachdichtung gemäß einem der Ansprüche 1 bis 19,
dadurch **gekennzeichnet**,
daß der Funktionsbereich, welcher erste und zweite Sicken (3, 3', 4, 4') umfaßt, als Einlageteil (1') und insbesondere als Einlagering ausgebildet ist, welcher in eine entsprechende Ausnehmung im restlichen Dichtungskörper eingesetzt ist.

21. Metallische Flachdichtung gemäß einem der Ansprüche 1 bis 20, nämlich Zylinderkopfdichtung oder Auspuff
dichtung.
